# EUROPEAN PATENT APPLICATION

(11) **EP 4 711 700 A1**
(43) Date of publication of application: **18.03.2026**
(21) Application number: 25189615.5
(22) Date of filing: 15.07.2025
(51) Int. Cl.: F28F 9/00, F28D 7/00

(54) **RUFFLED HEAT EXCHANGER FAIRING**

(30) Priority: 16.09.2024 US 202418886038
(71) Applicant: RTX Corporation, Farmington, CT 06032 (US)
(72) Inventor: Caldwell, Dustin D., Portland, 06480 (US); Sobanski, Jon Erik, Glastonbury, 06033 (US); Snyder, Jacob C., East Haddam, 06423 (US)
(74) Representative: Schmitt-Nilson Schraud Waibel Wohlfrom Patentanwälte Partnerschaft mbB

(57) **Abstract**

A heat exchanger fairing including a fairing wall comprising a flexible region configured to change at least one dimension responsive to thermal expansion or contraction of a heat exchanger.

## Description

This invention was made with Government support under contract DE-AR0001561 awarded by the United States Department of Energy. The government has certain rights in this invention.

The present disclosure is directed to the improved heat exchanger fairing.

High temperature heat exchangers generate large thermal stresses in areas where large temperature differences occur. Heat exchanger fairings are places where high stresses occur due to hot side /cold side pass throughs or attachment between the hot and cold sides. Portions of the heat exchanger that grow at different rates can create large stresses that can cause the heat exchanger fairing to fail.

In accordance with the present disclosure, there is provided a heat exchanger fairing comprising a fairing wall comprising a flexible region configured to change at least one dimension responsive to thermal expansion or contraction of a heat exchanger.

Particular embodiments further may include at least one, or a plurality of, the following optional features, alone or in combination with each other:

A further embodiment of any of the foregoing embodiments may additionally and/or alternatively include the fairing is configured to maintain a predetermined interior pressure within a heat exchanger interior.

A further embodiment of any of the foregoing embodiments may additionally and/or alternatively include the flexible region is configured to change dimensional shape within at least one of three dimensions.

A further embodiment of any of the foregoing embodiments may additionally and/or alternatively include the flexible region is configured as a ruffle shape.

A further embodiment of any of the foregoing embodiments may additionally and/or alternatively include the ruffle shape comprises a periodic wave which defines a change in direction similar to a waveform.

A further embodiment of any of the foregoing embodiments may additionally and/or alternatively include the flexible region comprises at least one ruffle shape per unit cell within the heat exchanger.

A further embodiment of any of the foregoing embodiments may additionally and/or alternatively include the fairing wall is constructed from diverse materials to impart predetermined flexibility throughout the flexible region.

In accordance with the present disclosure, there is provided a heat exchanger comprising a fairing comprising a fairing wall defining a heat exchanger interior, the fairing configured to maintain a predetermined interior pressure within the heat exchanger interior; a primary coil in operative communication with the fairing wall, the primary coil located within the heat exchanger interior; and a flexible region formed within the fairing wall, the flexible region configured to change at least one dimension responsive to thermal expansion or contraction of the heat exchanger.

Particular embodiments further may include at least one, or a plurality of, the following optional features, alone or in combination with each other:

A further embodiment of any of the foregoing embodiments may additionally and/or alternatively include the fairing is configured as a pressure boundary for a secondary working fluid flowing through the heat exchanger interior across an exterior of the primary coil.

A further embodiment of any of the foregoing embodiments may additionally and/or alternatively include the flexible region is configured as a ruffle shape.

A further embodiment of any of the foregoing embodiments may additionally and/or alternatively include the ruffle shape comprises a periodic wave which defines a change in direction as a waveform.

A further embodiment of any of the foregoing embodiments may additionally and/or alternatively include the flexible region comprises at least one ruffle shape per unit cell within the heat exchanger.

A further embodiment of any of the foregoing embodiments may additionally and/or alternatively include the heat exchanger further comprising a mount connecting the primary coil with the fairing wall.

In accordance with the present disclosure, there is provided a process for a heat exchanger comprising forming a fairing comprising a fairing wall defining a heat exchanger interior; configuring the fairing to maintain a predetermined interior pressure within the heat exchanger interior; coupling a primary coil in operative communication with the fairing wall; locating the primary coil within the heat exchanger interior; and forming a flexible region within the fairing wall; configuring the flexible region to change at least one dimension responsive to thermal expansion or contraction of the heat exchanger.

Particular embodiments further may include at least one, or a plurality of, the following optional features, alone or in combination with each other:

A further embodiment of any of the foregoing embodiments may additionally and/or alternatively include the process further comprising configuring the fairing as a pressure boundary for a secondary working fluid flowing through the heat exchanger interior across an exterior of the primary coil.

A further embodiment of any of the foregoing embodiments may additionally and/or alternatively include the process further comprising configuring the flexible region as a ruffle shape.

A further embodiment of any of the foregoing embodiments may additionally and/or alternatively include the process further comprising forming the ruffle shape with a periodic wave which defines a change in direction as a waveform.

A further embodiment of any of the foregoing embodiments may additionally and/or alternatively include the flexible region comprises at least one ruffle shape per unit cell within the heat exchanger.

A further embodiment of any of the foregoing embodiments may additionally and/or alternatively include the process further comprising connecting a mount between the primary coil and the fairing wall.

A further embodiment of any of the foregoing embodiments may additionally and/or alternatively include the process further comprising configuring the flexible region with the capacity to change dimensional shape in at least one of a first dimension and a second dimension.

Other details of the heat exchanger fairing are set forth in the following detailed description and the accompanying drawings wherein like reference numerals depict like elements.
Fig. 1 is a schematic representation of a heat exchanger with a fairing.
Fig. 2 is a schematic representation of a heat exchanger fairing with a ruffled structure.
Fig. 3 is a schematic representation of a heat exchanger fairing with a ruffled structure in two directions.

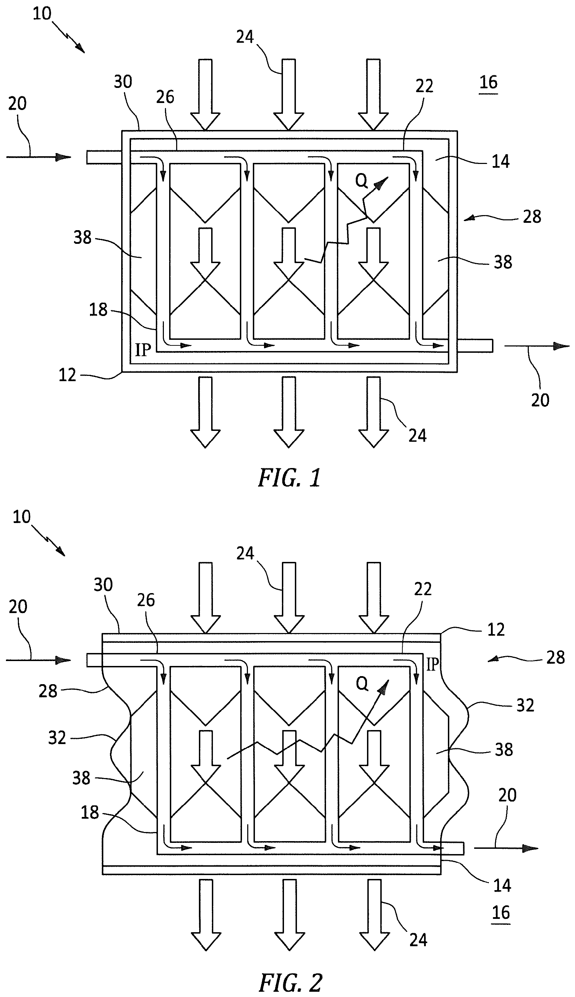

Referring now to Fig. 1 and Fig. 2 exemplary heat exchangers 10 are shown. The heat exchanger 10 includes a pressure housing or simply fairing 12. The fairing 12 defines a heat exchanger interior 14 and an exterior 16. The heat exchanger 10 can include a primary set of heat exchanger coils or tubes or fins, simply primary coils 18. The heat exchanger 10 can include a primary working fluid 20 configured to flow through an interior 22 of the primary coils 18. The heat exchanger can include a secondary working fluid 24 configured to flow across an exterior 26 of the primary coils 18.

The heat exchanger 10 is configured to transfer thermal energy Q from the secondary working fluid 24 to the primary working fluid 20. In an alternative embodiment, the thermal energy Q can be transferred from the primary working fluid 20 to the secondary working fluid 24.

The fairing 12 can be configured to maintain a predetermined interior pressure IP within the heat exchanger interior 14. The fairing 12 acts as the pressure boundary 28 for the secondary working fluid 24 flowing through the heat exchanger interior 14 across the primary coil 18 exterior 26.

The fairing 12 can be configured with fairing walls 30. The fairing walls 30 can be configured to maintain the pressure boundary 28. The fairing walls 30 can also be configured to provide structural support to the primary coil 18 within the heat exchanger interior 14. The structural support includes fixing the primary coil 18 in a location as well as accommodating expansion and contraction of the heat exchanger 10 during operation. The primary coil 18 components can become heated/cooled at rates that differ from the fairing 12. At times, the primary coil 18 can expand and change dimensions more rapidly than the fairing walls 30, or vice versa. The changes in dimensions between the fairing walls 30 and the primary coil 18 can create stresses that need to be accounted for to prevent failures, dislocations, cracking and the like. It is also possible for changes in dimensions to occur at different locations along the walls 30, as there can be significant differences in temperatures along a length of the heat exchanger that stimulates thermal growth at different rates stimulating stresses that can cause the heat exchanger to fail, such as cracks, bulges, loss of pressure boundary 28 and the like.

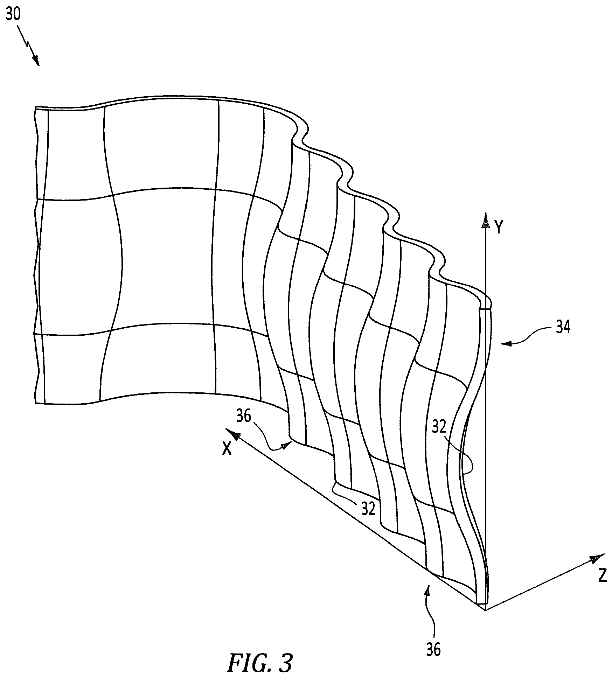

Also referring to Fig. 3, the fairing walls 30 can include a flexible region 32. The flexible region 32 is configured to change dimensional shape in at least one dimension responsive to the thermal expansion and/or contraction of the heat exchanger 10. As seen in Fig. 3, the fairing wall 30 can include the flexible region 32 that has the capacity to change dimensional shape in a first dimension 34 and a second dimension 36. The fairing wall 30 can be compliant in the X and Y direction relative to the primary coil 18. The Z axis can be the normal direction to the internal pressure IP within the fairing wall 30. It is contemplated that the flexible region 32 can be responsive in three dimensions, X, Y, and Z. The flexible region 32 can be configured to change dimensional shape at different rates within each of the three dimensions. For example, the flexible region 32 can expand more rapidly in the first dimension 34 than in the second dimension and vice versa. The flexible region 32 can be constructed from homogonous materials or can be constructed from diverse materials to impart predetermined flexibility throughout the flexible region 32. It is contemplated that the fairing wall 30 and/or primary coil 18 can be constructed employing additive manufacturing techniques. It is contemplated that the fairing wall 30 and/or primary coil 18 can be constructed employing brazing techniques. For example, the fairing wall 30 can be constructed from stamped sheet metal and formed and brazed around the primary coil 18.

In the example shown in Fig. 2, the walls 30 that support the primary coil 18 are configured with the flexible regions 32. The conductive heat transfer from the primary coil 18 to the fairing walls 30 that support the primary coil 18 can be accommodated by employing the flexible region 32, anticipating the more rapid expansion/contraction of the primary coil 18 that is attached with the fairing walls 30.

The flexible region 32 can be configured to resist the pressure created at the interior 14 and sustain the pressure boundary 28 of the fairing 12. Additionally, the flexible region 32 can be configured to be compliant and flex in response to thermal expansion/contraction experienced by the heat exchanger 10 during operation. The stiffness properties of the fairing walls 30 relative to the stiffness properties of the primary coil 18 are maintained by employing the flexible region 32. The fairing walls 30 can be configured as flexible as possible while still maintaining enough structural support to handle the pressure and load of the heat exchanger 10 operation.

It is contemplated that for stacked heat exchangers 10 with unit cells, that is multiple heat exchangers 10 arranged together in adjoining configurations, the flexible region 32 can be employed to account for the expected expansion/contraction between heat exchangers 10 in the stack to maintain the structural integrity. The primary coil 18 can be made of an arrangement of unit cells. Each unit cell represents a pattern that can be repeated such that the fluid manifolds are maintained throughout the primary coil 18. With each unit cell comprising an internal manifold pressure vessel for primary working fluid 20 and a large surface area to interface with the secondary working fluid 24. There can exist repeated patterns of the unit cells along any combination of the X-axis, Y-axis and Z-axis.

The flexible region 32 can be configured as a ruffle shape 34 as shown. The ruffle shape 34 can include a periodic wave 36 that includes a change in direction similar to a waveform. The periodic wave 36 shape can accommodate the change in shape along a particular dimension. In an exemplary embodiment, the flexible region 32 can have at least one ruffle shape 34 per unit cell within the heat exchanger 10. The ruffle shape 34 can include a periodic wave in two directions. The fairing wall 30 thickness can be uniform or it is contemplated that the fairing wall 30 thickness can be varied in the flexible region 32 to enhance the flexibility and/or strength of the fairing wall 30.

A structural mount 38 can be employed to connect the primary coil 18 with the fairing wall 30. The structural mount 38 can be configured to maintain the connection between the primary coil 18 and the fairing wall 30 as well as the flexible region 32 of the fairing wall 30. The structural mount 38 can be integrated with the fairing wall 30 by employing additive manufacturing techniques.

The disclosed heat exchanger 10 can be configured to undergo dimensional change while maintaining a stiffness with the regions of the heat exchanger 10. The fairing 12 can be configured as being compliant first and foremost. For example, the fairing 12 can maintain the internal pressure IP while being extremely flexible. The flexible region 32 can be configured to control a magnitude of the growth. The goal is to have the least thermal load mismatch as possible between the fairing 12 and the heat exchanger interior 14. It is contemplated that the amplitudes of the fairing wall 30 convolutions such that the cross sectional flow area remains constant. That is, the internal cross sectional area of the fairing wall 30 inner mold line in the X-Z plane, the area would be constant along the Y-axis. The fairing 12 can be configured as being compliant in response to internal pressure IP within the primary coil 18 manifold. Air pressure cycling can flex the primary coil 18 and drive stress between the primary coil 18 and the fairing wall 30.

A technical advantage of the disclosed heat exchanger fairing includes a heat exchanger configured to operate at higher temperatures and/or pressures.

Another technical advantage of the disclosed heat exchanger fairing includes the capacity to operate with a variety of fluids without the onset of overstressing the heat exchanger structure.

Another technical advantage of the disclosed heat exchanger fairing includes a pressure housing that is flexible.

Another technical advantage of the disclosed heat exchanger fairing includes a pressure housing that can provide structural support and resist pressure deformation.

Another technical advantage of the disclosed heat exchanger fairing includes a pressure housing that can allow for thermal expansion.

There has been provided a heat exchanger fairing. While the heat exchanger fairing has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A heat exchanger fairing comprising:
a fairing wall comprising a flexible region configured to change at least one dimension responsive to thermal expansion or contraction of a heat exchanger.

2. The heat exchanger fairing according to claim 1, wherein the fairing is configured to maintain a predetermined interior pressure within a heat exchanger interior.

3. The heat exchanger fairing according to claim 1 or 2, wherein the flexible region is configured to change dimensional shape within at least one of three dimensions.

4. The heat exchanger fairing according to any of claims 1 to 3, wherein the flexible region is configured as a ruffle shape.

5. The heat exchanger fairing according to claim 4, wherein the ruffle shape comprises a periodic wave which defines a change in direction similar to a waveform.

6. The heat exchanger fairing according to any of claims 1 to 5, wherein the flexible region comprises at least one ruffle shape per unit cell within the heat exchanger.

7. The heat exchanger fairing according to any of claims 1 to 6, wherein the fairing wall is constructed from diverse materials to impart predetermined flexibility throughout the flexible region.

8. A heat exchanger comprising a heat exchanger fairing according to any of claims 1 to 7, wherein:
the fairing comprises a fairing wall defining a heat exchanger interior, the fairing configured to maintain a predetermined interior pressure within the heat exchanger interior;
a primary coil is in operative communication with the fairing wall, the primary coil located within the heat exchanger interior; and
the flexible region is formed within the fairing wall.

9. The heat exchanger according to claim 8, wherein the fairing is configured as a pressure boundary for a secondary working fluid flowing through the heat exchanger interior across an exterior of the primary coil.

10. The heat exchanger according to claim 8 or 9, further comprising:
a mount connecting the primary coil with the fairing wall.

11. A process for a heat exchanger comprising:
forming a fairing comprising a fairing wall defining a heat exchanger interior;
configuring the fairing to maintain a predetermined interior pressure within the heat exchanger interior;
coupling a primary coil in operative communication with the fairing wall;
locating the primary coil within the heat exchanger interior; and
forming a flexible region within the fairing wall;
configuring the flexible region to change at least one dimension in an X-axis and Y-axis responsive to thermal/pressure expansion or contraction of the heat exchanger.

12. The process according to claim 11, further comprising:
configuring the fairing as a pressure boundary for a secondary working fluid flowing through the heat exchanger interior across an exterior of the primary coil.

13. The process according to claim 11 or 12, further comprising:
configuring the flexible region as a ruffle shape;
in particular further comprising:
forming the ruffle shape with a periodic wave which defines a change in direction as a waveform.

14. The process according to any of claims 11 to 13, wherein the flexible region comprises at least one ruffle shape per unit cell within the heat exchanger.

15. The process according to any of claims 11 to 14, further comprising:
configuring the flexible region compliant in a first axis X and/or a second axis Y less than the compliance of the primary coil; and/or
further comprising:
configuring the flexible region with the capacity to change dimensional shape in at least one of a first dimension and a second dimension.
